# EUROPÄISCHE PATENTSCHRIFT

(11) **EP 2 244 926 B1**
(45) Veröffentlichungstag und Bekanntmachung des Hinweises auf die Patenterteilung: **29.06.2011**
(21) Anmeldenummer: 09715057.7
(22) Anmeldetag: 19.02.2009
(51) Int. Cl.: B62D 1/184, G05G 1/32

(54) **LENKSÄULE FÜR EIN KRAFTFAHRZEUG, MIT EINER LENKSPINDEL UND EINER FESTSTELLEINRICHTUNG**
STEERING COLUMN FOR A MOTOR VEHICLE, COMPRISING A STEERING SHAFT AND A FIXING DEVICE
COLONNE DE DIRECTION POUR VÉHICULE AUTOMOBILE, POURVUE D'UN ARBRE DE DIRECTION ET D'UN DISPOSITIF DE BLOCAGE

(30) Priorität: 28.02.2008 DE 102008011618
(43) Veröffentlichungstag der Anmeldung: 03.11.2010
(73) Patentinhaber: ThyssenKrupp Presta Aktiengesellschaft, 9492 Eschen (LI)
(72) Erfinder: LUTZ, Christian, A-6714 Nüziders (AT)
(74) Vertreter: Hofmann, Ralf U.
(86) Internationale Anmeldenummer: PCT/AT2009/000062
(87) Internationale Veröffentlichungsnummer: WO 2009/105798

(56) Entgegenhaltungen:
- FR-A- 2 779 698

## Beschreibung

Die vorliegende Erfindung betrifft eine Lenksäule für ein Kraftfahrzeug, mit einer Lenkspindel und einer Feststelleinrichtung, welche mittels eines Betätigungshebels zwischen einem geöffneten Zustand und einem geschlossenen Zustand verstellbar ist, wobei die Lenkspindel im geöffneten Zustand der Feststelleinrichtung in ihrer Position verstellbar und im geschlossenen Zustand der Feststelleinrichtung in ihrer Position fixiert ist. Des Weiteren betrifft die Erfindung auch einen Betätigungshebel für eine solche Lenksäule.

Solche verstellbaren Lenksäulen sind in vielen verschiedenen Ausführungsformen bekannt. Die Feststelleinrichtungen können hierbei über miteinander verspannte Reibflächen kraftschlüssig oder durch ineinander greifende Verzahnungen formschlüssig wirken. Die Verstellbarkeit kann sich auf die achsiale Richtung der Lenksäule und/oder die Neigungsrichtung bzw. Höhenrichtung beziehen.

Um für den Fall eines Fahrzeugcrashes den Schutz des Fahrzeugführers zu verbessern, insbesondere gegenüber einem Aufprall des Knies auf den Betätigungshebel der Feststelleinrichtung, wurde in der WO 03/018 384 A1 bereits vorgeschlagen, den Betätigungshebel als Deformationselement auszubilden, sodass er durch einen Aufprall unter Energieaufnahme deformierbar ist. Zu diesem Zweck ist er vorzugsweise mit einer Sollknickstelle versehen. Die zur Deformation des Betätigungshebels führende Kraft muss hierbei ausreichend hoch gewählt werden, um eine Deformation im Normalbetrieb auszuschließen. Weiters muss der Betätigungshebel mit einer entsprechenden Geometrie ausgebildet werden, damit es durch eine im Crashfall in Richtung hin zur Fahrzeugfront wirkende Aufprallkraft zu einer Deformation des Betätigungshebels kommt.

Aus der DE 10 141 551 A1 ist weiters eine verstellbare Lenksäule bekannt, bei der ein Hebelteil des Betätigungshebels mit einem Lagerteil über einen Abreißmechanismus verbunden ist, durch welchen sich das Hebelteil im Crashfall vom Lagerteil lösen kann. Die in dieser Schrift gezeigte Ausbildung ist relativ aufwendig.

Die US 7,125,046 B2 zeigt eine verstellbare Lenksäule, bei der sich im Crashfall das Mantelrohr in Richtung zur Fahrzeugfront verschieben kann. Hierbei wird auch der Betätigungshebel für den Klemmmechanismus in Richtung zur Frontseite des Fahrzeugs bewegt, wodurch der Knieschutz des Fahrers verbessert werden soll.

Aus der US 6,082,216 ist weiters ein nicht gattungsgemäßer Schalthebel eines Kraftfahrzeuges bekannt, der in eine achsiale Öffnung eines Hebelhalters ragt. Von der Innenseite der Wandung der Öffnung springen Rippen hervor. Durch eine auf den Schalthebel wirkende Aufprallkraft kann dieser unter Verformung der Rippen weiter in die Öffnung des Hebelhalters eingeschoben werden.

Die FR 2 779 698 offenbart eine gattungsgemäße Lenksäule bei der der Betätigungshebel teleskopierbar ausgeführt ist.

Aufgabe der Erfindung ist es, eine Lenksäule der eingangs genannten Art bereit zu stellen, bei der ein effektiver Schutz des Fahrers gegenüber einem Aufprall auf den Betätigungshebel, insbesondere im Crashfall, erreicht wird.

Erfindungsgemäß gelingt dies, indem der Betätigungshebel zumindest einen Bedienabschnitt und zumindest einen Lagerabschnitt und der Lagerabschnitt zumindest zwei Lagerflächen aufweist, wobei der Bedienabschnitt zwischen den Lagerflächen in einer ersten Betriebsstellung gehalten ist und in zumindest einer Verschieberichtung aus der ersten Betriebsstellung in zumindest eine weitere Betriebsstellung verschiebbar ist, wobei der Bedienabschnitt in der weiteren Betriebsstellung zwischen den Lagerflächen in zumindest einer zur Verschieberichtung orthogonalen Bewegungsrichtung bewegbar am Lagerabschnitt gehalten ist.

Der Betätigungshebel, der zum Verstellen der Feststelleinrichtung zwischen dem geöffneten Zustand und dem geschlossenen Zustand verwendet wird, ist gemäß der Erfindung somit zumindest zweiteilig aufgebaut. Er weist einen Betätigungsabschnitt auf, an dem man mit der Hand angreift, um die Feststelleinrichtung zwischen dem geöffneten Zustand und dem geschlossenen Zustand zu verstellen. Darüber hinaus weist er auch einen Lagerabschnitt auf, welcher den Bedienabschnitt in der ersten Betriebsstellung, vorzugsweise formschlüssig oder zumindest kraftschlüssig oder reibschlüssig, hält bzw. festhält. Diese erste Betriebsstellung zwischen Bedienabschnitt und Lagerabschnitt stellt den Normalzustand dar. In diesem ist der Bedienabschnitt fest und unbeweglich gegenüber dem Lagerabschnitt an letzterem gehalten. In dieser ersten Betriebsstellung kann durch Bedienen des Bedienabschnitts der Betätigungshebel wie an sich bekannt geschwenkt werden, um die Feststelleinrichtung in den geöffneten oder in den geschlossenen Zustand zu bringen. Um nun zu verhindern, dass der Fahrer des Fahrzeugs, insbesondere im Fall eines Crashs bzw. Unfalls, sich am Betätigungshebel bzw. insbesondere am Bedienabschnitt verletzen kann, ist nun gemäß der Erfindung zumindest eine weitere Betriebsstellung vorgesehen, in die der Bedienabschnitt in Verschieberichtung relativ zum Lagerabschnitt verschoben werden kann, wenn der Fahrer bzw. dessen Knie auf den Bedienabschnitt auftrifft. Der Bedienabschnitt ist in dieser weiteren Betriebsstellung zwischen den Lagerflächen des Lagerabschnitts, vorzugsweise zusätzlich zu einer auch in dieser weiteren Betriebsstellung möglichen Verschiebbarkeit in Verschieberichtung, in zumindest einer zur Verschieberichtung orthogonalen Bewegungsrichtung bewegbar, wobei der Bedienabschnitt aber nach wie vor auch in der weiteren Betriebsstellung am Lagerabschnitt gehalten ist und nicht vollkommen von diesem getrennt ist bzw. abfällt. Vorzugsweise ist vorgesehen, dass der Bedienabschnitt des Betätigungshebels im Crash-Fall in zumindest zwei Richtungen, nämlich in der Verschieberichtung und in der dazu orthogonalen Bewegungsrichtung verschiebbar ist, damit der Fahrer bzw. dessen Knie nicht am Betätigungshebel verletzt wird.

Besonders bevorzugt ist vorgesehen, dass der Bedienabschnitt aus der ersten Betriebsstellung in mindestens zwei, vorzugsweise mehreren, verschiedenen bzw. winkelig (also nicht parallel) zueinander ausgerichteten Verschieberichtungen in die weitere(n) Betriebsstellung(en) verschiebbar ist, wobei vorzugsweise die möglichen Verschieberichtungen zueinander einen beliebigen Winkel in einem durchgehenden Winkelbereich, vorzugsweise von zumindest 30°, einnehmen können. Dies ermöglicht es, dass der Bedienabschnitt zum Verlassen der ersten Betriebsstellung nicht zwingend in einer einzigen Verschieberichtung relativ zum Lagerabschnitt verschoben werden muss, sondern von Anfang an verschiedene Verschieberichtungen möglich sind, um die erste Betriebsstellung zu verlassen. Günstigerweise sind somit von Anfang an Verschieberichtungen möglich, die beliebig in einem Winkelbereich, vorzugsweise von zumindest 30° oder zumindest 60°, liegen können.

Um den Bedienabschnitt in der ersten Betriebsstellung zu halten, können verschiedene Maßnahmen vorgesehen sein. Eine erste Variante sieht vor, dass zumindest ein elastisch deformierbarer Deformationskörper zwischen dem Bedienabschnitt und dem Lagerabschnitt wirkt und/oder angeordnet ist, wobei der Deformationskörper beim Verschieben des Bedienabschnitts von der ersten Betriebsstellung in die weitere Betriebsstellung elastisch deformierbar, vorzugsweise komprimierbar, ist. Als ein solcher Deformationskörper kann z. B. eine Schraubenfeder, vorzugsweise eine Rechteckschraubenfeder, insbesondere mit schmaler Bauweise, zwischen dem Bedienabschnitt und dem Lagerabschnitt wirken bzw. angeordnet sein. Durch die Federkraft bzw. die elastischen Eigenschaften eines solchen Deformationskörpers kann ein Kraftsollwert vorgegeben werden. Liegen die auf den Bedienabschnitt einwirkenden Kräfte unterhalb dieses Kraftsollwertes, so verbleibt der Bedienabschnitt in der ersten Betriebsstellung, in der er, vorzugsweise formschlüssig oder zumindest kraftschlüssig oder reibschlüssig, am Lagerabschnitt gehalten ist. Wird dieser Kraftsollwert bei einem Aufprall auf den Bedienabschnitt überschritten, so erfolgt die erfindungsgemäße Verschiebung in die weitere Betriebsstellung, in der der Bedienabschnitt relativ zum Lagerabschnitt zumindest in der zur Verschieberichtung orthogonalen Bewegungsrichtung bewegbar ist. In diesem Zusammenhang kann vorgesehen sein, dass der Deformationskörper am Bedienabschnitt und/oder am Lagerabschnitt lösbar abgestützt oder auch fixiert ist. Es kann vorgesehen sein, dass der Deformationskörper permanent zwischen Bedienabschnitt und Lagerabschnitt wirkt. Es kann aber auch vorgesehen sein, dass der Deformationskörper nur am Anfang oder am Ende der Verschiebung in Verschieberichtung zwischen dem Bedienabschnitt und dem Lagerabschnitt wirkt. Wirkt er am Anfang des Verschiebevorgangs, so kann er den Kraftsollwert bereitstellen, bei dessen Überschreitung eine Verschiebung stattfinden kann. Wirkt er nur am Ende der Verschiebebewegung, so fängt er den Bedienabschnitt ab einem gewissen Verschiebeweg sanft auf.

Alternativ oder zusätzlich zum Deformationskörper kann auch eine Auslöseeinrichtung, vorzugsweise in Form einer Rastverbindung, vorgesehen sein, die den Bedienabschnitt bei einer Krafteinwirkung unterhalb des Kraftsollwertes am Lagerabschnitt in der ersten Betriebsstellung hält und den Bedienabschnitt bei einer Krafteinwirkung oberhalb des Kraftsollwertes zum Verschieben in der Verschieberichtung freigibt. In diesem Zusammenhang kann z. B. vorgesehen sein, dass die Auslöseeinrichtung eine Rastfeder und eine Rastausnehmung aufweist, wobei die Rastfeder am Lagerabschnitt befestigt und die Rastausnehmung am Bedienabschnitt angeordnet oder die Rastfeder am Bedienabschnitt befestigt und die Rastausnehmung am Lagerabschnitt angeordnet ist und die Rastfeder mit einer Rastnase in der ersten Betriebsstellung in die Rastausnahme eingerastet ist. Bei dieser Variante wird der Kraftsollwert, gegebenenfalls zusammen mit den elastischen Eigenschaften des Deformationskörpers, durch die Kraft vorgegeben, die dazu notwendig ist, dass die Rastnase aus der Rastausnahme ausrastet, um so die Bewegung des Bedienabschnittes in Verschieberichtung in die weitere Betriebsstellung freizugeben.

Hierzu wiederum alternative Ausgestaltungsformen einer Auslöseeinrichtung könnten z. B. ein Scherstift (oder andere formschlüssige Maßnahmen) vorsehen, welcher den Bedienabschnitt in der ersten Betriebsstellung am Lagerabschnitt festhält und erst ab einer gewissen Krafteinwirkung abgeschert wird, sodass sich der Bedienabschnitt in Verschieberichtung in die zumindest eine weitere Betriebsstellung verschieben lässt. Alternativ ist es auch möglich, den Bedienabschnitt in der ersten Betriebsstellung reibschlüssig zwischen den Lagerflächen des Lagerabschnitts zu halten. Bei solchen Varianten kann der Bedienabschnitt erst dann in eine weitere Betriebsstellung bewegt werden, wenn Kräfte auftreten, die diesen Reibschluss der Auslöseeinrichtung aufheben.

Um eine Bewegung des Bedienabschnitts in seiner weiteren Betriebsstellung in der zur Verschieberichtung orthogonalen Bewegungsrichtung zu erlauben, ist günstigerweise vorgesehen, dass die Lagerflächen des Lagerabschnitts, welche den Bedienabschnitt in der ersten Betriebsstellung halten, mit einem in Verschieberichtung zunehmenden Abstand voneinander am Lagerabschnitt angeordnet sind. Auf diese Weise ist es besonders gut möglich, dem Bedienabschnitt bei Verschieben in Verschieberichtung einen zusätzlichen Freiheitsgrad zur Bewegung in der zur Verschieberichtung orthogonalen Bewegungsrichtung zu erlauben. In einer einfachen Ausgestaltungsform können die Lagerflächen hierfür V-förmig angeordnet sein. Es ist aber auch jede andere in Verschieberichtung auseinander verlaufende Anordnung der Lagerflächen denkbar. Günstigerweise sind die Lagerflächen jedenfalls auf einander gegenüberliegenden Seiten des Bedienabschnitts angeordnet um diesen in der ersten Betriebsstellung zu halten. Alternativ ist es zum Beispiel aber auch möglich, dass die Lagerflächen des Lagerabschnitts in nutförmige und in eine Richtung entsprechend aufgeweitete Ausnehmungen am Bedienabschnitt eingreifen, wobei die Lagerflächen sich in den weiteren Betriebsstellungen in der Aufweitung der Ausnehmung befinden und so die erfindungsgemäße Bewegbarkeit des ersten Bedienabschnitts in der orthogonalen Richtung ermöglichen. In der ersten Betriebsstellung können die Lagerflächen dann in einem entsprechend passgenauen engen Bereich der Ausnehmungen festgehalten sein.

Weitere Einzelheiten und Merkmale bevorzugter Ausgestaltungsformen der Erfindung werden anhand der Figurenbeschreibung erläutert. Dabei zeigen:
- Fig. 1 und 2: Prinzipskizzen zur Erläuterung der Erfindung;
- Fig. 3: ein konkretes Ausführungsbeispiel, bei der ein erfindungsgemäß ausgebildeter Betätigungshebel an einer Lenksäule montiert ist;
- Fig. 4: die erste Betriebsstellung des Ausführungsbeispiels aus Fig. 3;
- Fig. 5 und 6: zwei weitere Betriebsstellungen dieses Ausführungsbeispiels;
- Fig. 7: eine Explosionsdarstellung des Betätigungshebels dieser Ausführungsvariante;
- Fig. 8: den Bedienabschnitt dieses Betätigungshebels;
- Fig. 9 und 10: den Lagerabschnitt dieses Ausführungsbeispiels aus zwei verschiedenen per- spektivischen Ansichten;
- Fig. 11: eine Seitenansicht auf die zur Darstellung gemäß Fig. 4 entgegensetzte Seite des Betätigungshebels, wobei das Gehäuse abgenommen ist;
- Fig. 12: einen Schnitt durch diese Ausführungsvariante entlang der Schnittlinie A-A aus Fig. 4;
- Fig. 13: einen Schnitt durch dieses Ausführungsbeispiel entlang der Schnittlinie B-B gemäß Fig. 4;
- Fig. 14: einen Schnitt durch dieses Ausführungsbeispiel entlang der Schnittlinie C-C gemäß Fig. 4;
- Fig. 15: einen Schnitt durch dieses Ausführungsbeispiel entlang der Schnittlinie D-D gemäß Fig. 4;
- Fig. 16: einen Schnitt durch dieses Ausführungsbeispiel entlang der Schnittlinie E-E gemäß Fig. 4;
- Fig. 17: einen Schnitt durch dieses Ausführungsbeispiel entlang der Schnittlinie F-F gemäß Fig. 4 und
- Fig. 18: einen Schnitt durch dieses Ausführungsbeispiel entlang der Schnittlinie G-G gemäß Fig. 4.

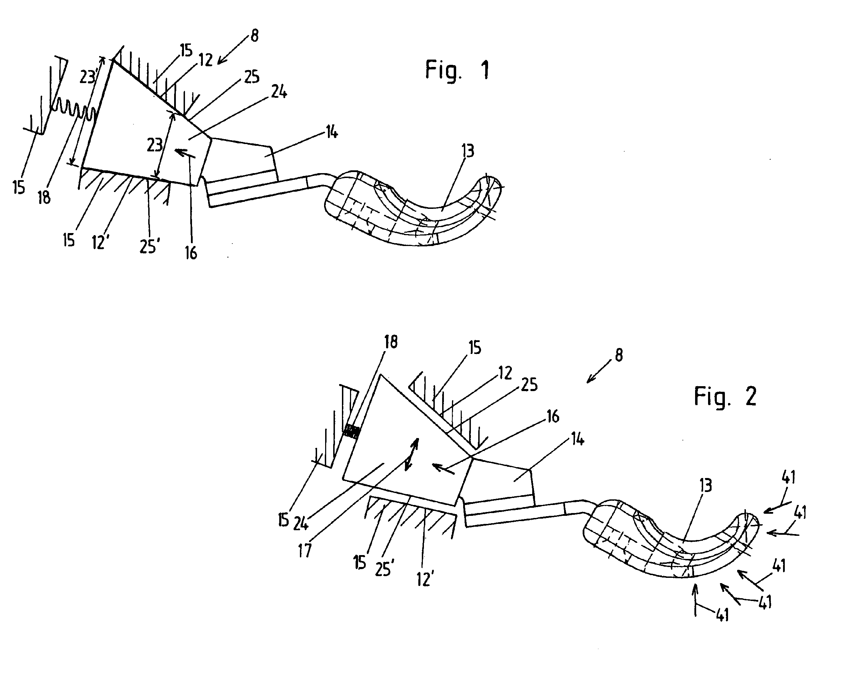

Die Prinzipskizze gemäß Fig. 1 zeigt die erste Betriebsstellung in der der den Handgriff tragende Bedienabschnitt 14 zwischen den zwei Lagerflächen 12 und 12' des hier nur teilweise dargestellten Lagerabschnitts 15 gehalten ist. Der Bedienabschnitt 14 weist hierfür einen Klemmkörper 24 auf, der in dieser ersten Betriebsstellung zwischen den Lagerflächen 12 und 12' des Lagerabschnitts 15 gehalten ist. Alternativ ist natürlich auch ein kraftschlüssiges oder reibschlüssiges Festhalten dieses Klemmkörpers 24 bzw. des Bedienabschnitts 14 in der ersten Betriebsstellung denkbar. In Fig. 1 ist auch zu erkennen, wie die Lagerflächen 12 und 12' mit einem in Verschieberichtung 16 zunehmenden Abstand 23 bzw. 23' voneinander beabstandet am Lagerabschnitt 15 angeordnet sind. Hierdurch ergibt sich eine V-Form, in der der Klemmkörper 24 des Bedienabschnitts 14 wie ein Keil gehalten ist. Um diese Keilform zu erreichen, müssen die Lagerflächen 12, 12' bzw. die dazu korrespondierenden Gegenlagerflächen 25 und 25' des Klemmkörpers 24 natürlich nicht zwingend geradlinig verlaufen, wie dies im hier dargestellten Ausführungsbeispiel der Fall ist. Es ist auch jede andere sich in Verschieberichtung 16 weiter öffnende Ausgestaltungs- bzw. Anordnungsform möglich. In dieser gemäß Fig. 1 erläuterten ersten Betriebsstellung ist der Bedienabschnitt 14 fest am Lagerabschnitt 15 gehalten, sodass mittels des so gebildeten Betätigungshebels 8 die Feststelleinrichtung 5 z. B. durch Verschwenken des Betätigungshebels 8, also durch gemeinsames Verschwenken von Bedienabschnitt 14 und Lagerabschnitt 15, zwischen der geöffneten und der geschlossenen Stellung hin und her verstellt werden kann. Bei diesem Verstellen der Feststelleinrichtung 5 verbleiben der Bedienabschnitt 14 und der Lagerabschnitt 15 in ihrer relativen Lage zueinander, es erfolgt somit kein Verschieben des Bedienabschnitts 14 in Verschieberichtung 16 relativ zum Lagerabschnitt 15. Wie in Fig. 1 nur schematisiert dargestellt, wirkt bei der hier gezeigten Variante die Federkraft des Deformationskörpers 18 auf den Bedienabschnitt 14 und drückt dadurch den Bedienabschnitt entgegen der Verschieberichtung 16 auf die Lagerflächen 12, 12'.

Wird auf den Bedienabschnitt 14 bzw. den daran angeordneten Griff 13 nun eine entsprechend gerichtete und betragsmäßig entsprechend große Kraft z. B. durch den Aufprall des Knies des Fahrers ausgeübt und überschreitet diese Kraft den durch die elastischen Eigenschaften des Deformationskörpers 18 vorgegebenen Kraftsollwert, so wird der Bedienabschnitt 14 in Verschieberichtung 16 relativ zum Lagerabschnitt 15 verschoben. Hierdurch geraten die Lagerflächen 12 und 12' des Lagerabschnitts 15 und die Gegenlagerflächen 25 und 25' des Klemmkörpers 24 bzw. des damit fix verbundenen Bedienabschnitts 14 außer Eingriff, sodass der Bedienabschnitt 14 somit nicht mehr am Lagerabschnitt 15 gehalten ist. Durch das Verschieben in Verschieberichtung 16 erhält der Bedienabschnitt 14 einen zusätzlichen Freiheitsgrad der Bewegung. Er kann sich in dieser in Fig. 2 dargestellten, weiteren Betriebsstellung somit relativ zum Lagerabschnitt 15 in der zur Verschieberichtung 16 orthogonalen Bewegungsrichtung 17 und in der gezeigten Variante zusätzlich auch in Verschieberichtung 16 bewegen. Diese Bewegungsmöglichkeit verhindert, dass das Knie des Fahrers auf einen starr in den Fahrgastraum hineinstehenden Bedienabschnitt 14 bzw. Betätigungshebel 8 trifft und daran verletzt wird. Der Bedienabschnitt 14 bzw. dessen Handgriff 13 kann zumindest in gewissem Umfang der Bewegung des Knies oder anderen Körperteils des Fahrers folgen.

Wie bereits aus den Prinzipskizzen gemäß Fig. 1 und 2 ersichtlich, kann der Deformationskörper 18 nicht nur dazu verwendet werden, den Kraftsollwert vorzugeben, ab dem ein Verschieben des Bedienabschnitts 14 in Verschieberichtung 16 möglich wird. Der Deformationskörper 18 kann vielmehr auch die Länge des Verschiebeweges in Abhängigkeit der auf den Bedienabschnitt 14 einwirkenden Kräfte bestimmen und für eine Rückstellung des Bedienabschnitts 14 in seine erste Betriebsstellung gemäß Fig. 1 sorgen, sobald die auf den Griff 13 bzw. den Bedienabschnitt 14 wirkende Kraft aus einer der Richtungen 41 aufgehoben ist. Der Deformationskörper 18 kann durch seine maximal mögliche Verformung auch das Ende des Verschiebeweges vorgeben. Ebenfalls gut anhand von Fig. 2 zu erkennen ist, kann der Bedienabschnitt 14, sobald er nicht mehr form- oder kraftschlüssig am Lagerabschnitt 15 gehalten ist, verschiedenste Linear- oder Schwenk- bzw. Rotationsbewegungen sowie Überlagerungen dieser Bewegungen gegenüber dem Lagerabschnitt 15 ausführen. Durch diese Bewegbarkeit sowohl in Verschieberichtung 16 als auch in Bewegungsrichtung 17 sind Bewegungen möglich, bei denen keine fixe Schwenk- oder Drehachse vorgegeben ist. Es existieren somit zahlreiche weitere Betriebsstellungen zwischen Bedienabschnitt 14 und Lagerabschnitt 15. Der erfindungsgemäße Betätigungshebel 8 ist somit optimal dafür ausgelegt, Verletzungen des Fahrers bei einem Aufprall auf den Betätigungshebel 8 zu vermeiden, und dies weitgehend unabhängig davon, aus welcher der Richtungen 41 der Aufprall nun im Detail erfolgt. Der Bedienabschnitt 14 und der Lagerabschnitt 15 mit ihren Lagerflächen und Gegenlagerflächen sind günstigerweise so ausgeformt, dass eine Auslösung des Bedienabschnitts 14 im Crashfall sowohl für einen Aufprall aus einer Richtung 41, welche parallel zur Lenkspindel 1 verläuft, als auch für einen Aufprall aus einer Richtung 41, welche orthogonal zur Lenkspindel 1 verläuft, als auch für alle winkelmäßig dazwischen liegenden Richtungen 41 erfolgt. Dies gilt günstigerweise für alle Stellungen der Lenksäule 1 bezüglich der Neigungs- bzw. Höhenverstellung und kann in verschiedensten Ausführungsbeispielen der Erfindung realisiert sein. Bei Aufprallvorgängen aus den Richtungen 41 kann der Griff 13 dadurch ausgehend von der ersten Betriebsstellung in der jeweiligen Richtung 41 verschoben werden.

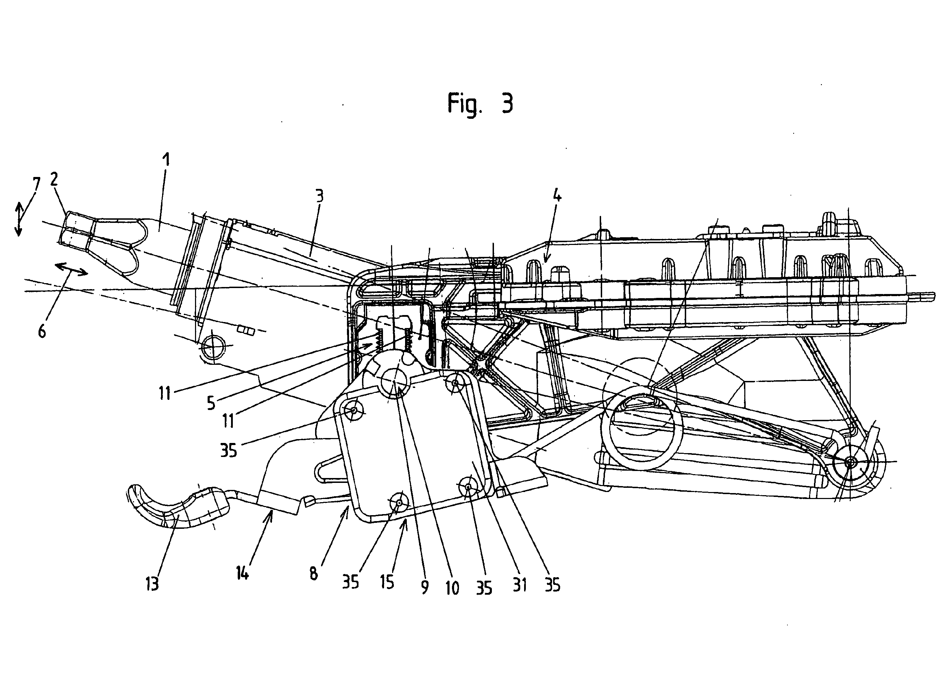

Eine mögliche Ausführungsform einer Lenksäule, bei der ein Betätigungshebel 8 gemäß der Erfindung eingesetzt ist, ist in Fig. 3 dargestellt. Die Lenksäule umfasst eine Lenkspindel 1, von der ein an ein lenkradseitiges Ende 2 anschließender Abschnitt in einer Manteleinheit 3 drehbar gelagert ist. Die Manteleinheit 3 wird von einer am Chassis eines Kraftfahrzeuges anbringbaren Trageinheit 4 getragen. Im geöffneten Zustand einer Feststelleinrichtung 5 kann die Manteleinheit 3 gegenüber der Trageinheit 4 verstellt werden, im gezeigten Ausführungsbeispiel in eine Verstellrichtung 7.

Auch wenn dies in diesem Ausführungsbeispiel nicht gezeigt ist, kann wie beim Stand der Technik bekannt, die Feststelleinrichtung so ausgebildet sein, dass zusätzlich oder alternativ zur Bewegungsrichtung 7 eine Verstellrichtung 6, in der die Lenkspindel 1 in achsialer Richtung der Lenkspindel 1 verstellbar ist, vorgesehen ist. Ob nun sowohl eine Verstellbarkeit in achsialer Richtung 6 als auch in Neigungs- bzw. Höhenrichtung 7 möglich ist, ist vollkommen unabhängig von der vorliegenden Erfindung. In beiden Fällen kann ein erfindungsgemäß ausgebildeter Betätigungshebel 8 eingesetzt werden.

Die Feststelleinrichtung wird mittels des Betätigungshebels 8 geöffnet und geschlossen. Dieser ist hierzu fix mit dem Spannbolzen 10 verbunden. Durch Schwenken des Betätigungshebels 8 um die Achse 9 des Spannbolzens 10 wird die Feststelleinrichtung 5 zwischen dem geöffneten und dem geschlossenen Zustand verstellt. Dies ist an sich bekannt. Fig. 3 zeigt die Stellung des Betätigungshebels 8 in der geschlossenen Stellung der Feststelleinrichtung 5, in der die Lenkspindel 1 in ihrer Position fixiert ist. Die Feststelleinrichtung 5 wirkt im gezeigten Ausführungsbeispiel formschlüssig über die ineinander eingreifenden Verzahnungen 11. Alternativ zu einer formschlüssig wirkenden Feststelleinrichtung 5, wie hier gezeigt, können auch reibschlüssig wirkende Feststelleinrichtungen 5 mit und ohne Lamellen, wie sie beim Stand der Technik bekannt sind, mit einem erfindungsgemäßen Betätigungshebel 8 kombiniert werden. Die Art der Feststellung der Manteleinheit 3 gegenüber der Trageinheit 4 im geschlossenen Zustand der Feststelleinrichtung 5 und der durch Verschwenken des Betätigungshebels 8 um die Achse 9 betätigte Mechanismus zum Öffnen und Schließen der Feststelleinrichtung 5 ist nicht Gegenstand der vorliegenden Erfindung. Die in Fig. 3 gezeigte Variante ist nur ein Beispiel.

Zumindest in der Schließstellung des Betätigungshebels 8 ist dieser zu seinem freien Bedienende 13 hin von der Fahrzeugfront weggerichtet, also dem Fahrer zugewandt. Im Falle eines Fahrzeugcrashes kann somit der Fahrer, insbesondere mit seinem Knie, auf das Bedienende 13 des Betätigungshebels 8 aufprallen.

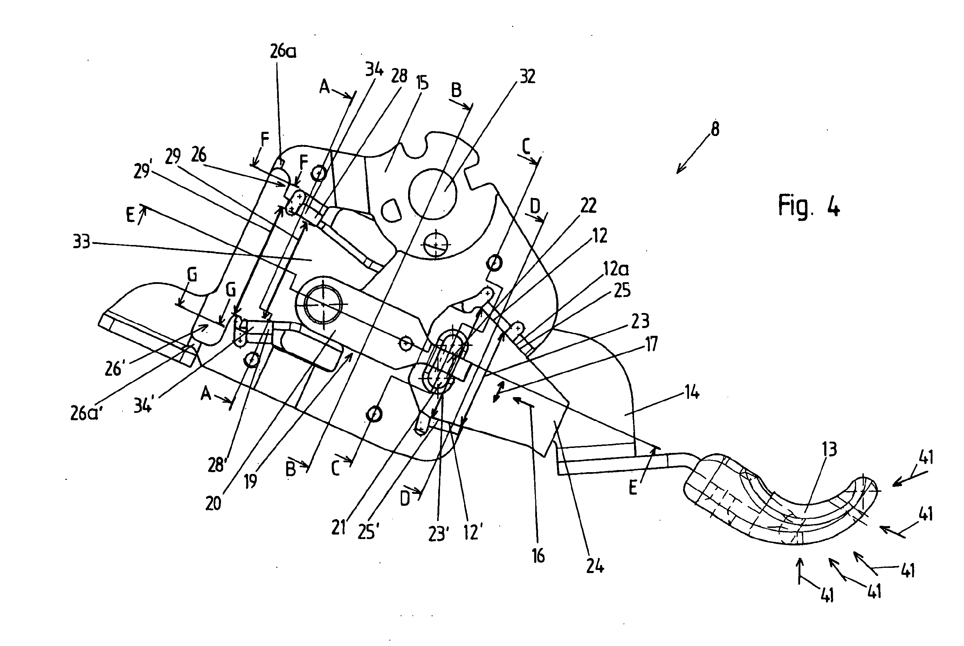

Die Fig. 4, 5 und 6 zeigen jeweils Seitenansichten auf den Betätigungshebel 8 aus Fig. 3 auf die dem Gehäuse 31 gegenüberliegende Seite. Die Fig. 4 zeigt die erste Betriebsstellung, bei der der Bedienabschnitt 14 im Lagerabschnitt 15 gehalten ist. In dieser Stellung erfolgt das anhand von Fig. 3 erläuterte Verschwenken des gesamten Betätigungshebels 8 um die Achse 9, um die Feststelleinrichtung 5 zwischen dem geöffneten und geschlossenen Zustand zu verstellen. Der in den Fig. 4 bis 6 nicht dargestellte Spannbolzen 10 ist in der Spannbolzenaufnahme 32 des Lagerabschnitts 15 durch geeignete, beim Stand der Technik bekannte Mittel drehfest gelagert.

Im vorderen zum Griff 13 hin weisenden Abschnitt des Lagerabschnitts 15 des Betätigungshebels 8 sind zunächst einmal die miteinander korrespondierenden Lagerflächen 12 und 12' vorgesehen, welche in einem in Verschieberichtung 16 zunehmenden Abstand 23, 23' voneinander am Lagerabschnitt 15 angeordnet sind. Diese Lagerflächen 12 und 12' bilden ein erstes Paar von Lagerflächen und wirken in dieser Betriebsstellung mit den entsprechenden Gegenlagerflächen 25 und 25' des fix am Bedienabschnitt 14 angeordneten Klemmkörpers 24 zusammen. Am dem Griff 13 des Bedienabschnitts 14 zugewandten Ende des Lagerabschnitts 15 ist in diesem Ausführungsbeispiel eine zurückgesetzte Lagerfläche 12a vorgesehen, die, damit es bei einer Relativverschiebung oder bei einem Relativverschwenken des Bedienabschnitts 14 gegen den Lagerabschnitt 15 möglichst nicht zum Verkanten oder Verklemmen kommt, in der ersten Betriebsstellung von der Gegenlagerfläche 25 (z.B. 3/10 mm) beabstandet ist. Die mit etwas Spiel gegenüber der Gegenlagerfläche 25 zurückgesetzte Lagerfläche 12a bildet somit eine Hilfsführung, an der der Bedienabschnitt 14 geführt werden bzw. entlang gleiten kann. Sie kann auch als Verlängerung der Lagerfläche 12 ausgeführt sein.

Im hier gezeigten Ausführungsbeispiel sind zusätzlich zu diesen Lagerflächen 12 und 12' am hinteren, vom Griff 13 abgewandten Ende des Lagerabschnitts 15, also in Verschieberichtung 16 hinter den Lagerflächen 12 und 12', zumindest zwei Zusatzlagerflächen 28 und 28' gegen ein Verkanten im Falle eines Crash vorgesehen, zwischen denen der Bedienabschnitt 14 in der hier gezeigten ersten Betriebsstellung ebenfalls gehalten ist. Abweichend vom hier gezeigten Beispiel kann aber natürlich auch bei diesen Zusatzlagerflächen 28 und 28' ein beliebiger anderer Form- oder Reib- oder Kraftschluss mit dem Bedienabschnitt 14 vorgesehen sein. Auch die Zusatzlagerflächen 28 und 28' sind mit einem in Verschieberichtung zunehmenden Abstand 29 und 29' voneinander am Lagerabschnitt 15 angeordnet. Auch der Abstand zwischen den Zusatzlagerflächen 28 und 28' nimmt somit in Verschieberichtung 16 zu. Um mit diesen Zusatzlagerflächen 28 und 28' in Kontakt treten zu können, weist der Bedienabschnitt 14 zusätzlich zum vorderen Klemmkörper 28 den Zusatzklemmkörper 33 auf, an welchem die Zusatzgegenlagerflächen 34 und 34' angeordnet sind, welche in Fig. 4 an den Zusatzlagerflächen 28 und 28' des Lagerabschnitts 15 lagern. Im hier gezeigten Ausführungsbeispiel weist der Bedienabschnitt 14 somit zwei, in Bedienrichtung hintereinander angeordnete Klemmkörper 24 und 33 auf, welche jeweils im Wesentlichen V-förmig bzw. in Verschieberichtung 16 auseinanderlaufend ausgebildet sind und in der ersten Betriebsstellung über ihre Gegenlagerflächen 25, 25' und 34, 34' an den Lagerflächen 12 und 12' bzw. 28 und 28' anliegen.

In der in Fig. 4 gezeigten Darstellung ist besonders gut die Auslöseeinrichtung 19 zu erkennen, welche im gezeigten Ausführungsbeispiel eine Rastfeder 20 aufweist, welche in der ersten Betriebsstellung mit ihrer Rastnase 22 in eine Rastausnehmung 21 eingreift. In der hier gezeigten Variante ist die Rastfeder 20 am Lagerabschnitt 15 befestigt und die Rastausnehmung 21 am Bedienabschnitt 14 vorgesehen. Dies muss aber nicht so sein, es ist genau so gut möglich, die Rastfeder 20 am Bedienabschnitt 14 zu fixieren und die Rastausnehmung 21 am Lagerabschnitt 15 anzuordnen.

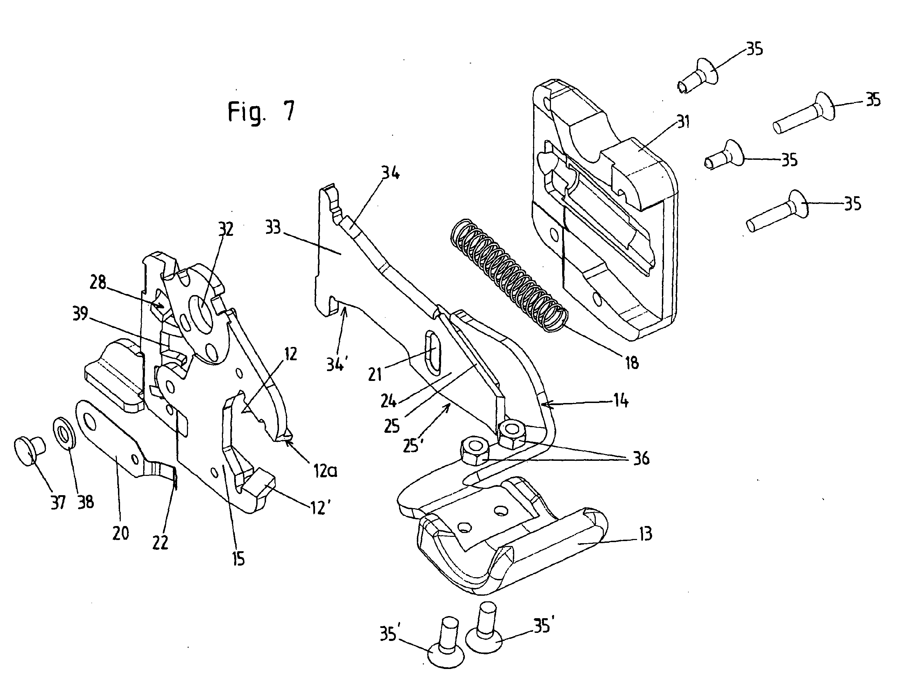

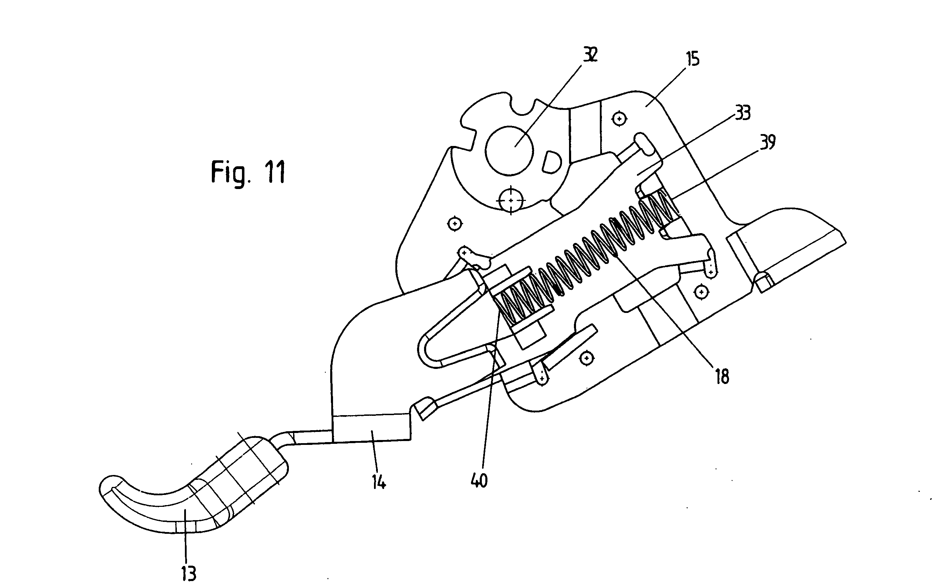

Zusätzlich zu dieser so ausgebildeten Auslöseeinrichtung 19 ist im gezeigten Ausführungsbeispiel, wie besonders gut in den Fig. 7 und 11 zu sehen, auch ein Deformationskörper 18 in Form einer Schraubenfeder vorgesehen, welcher zwischen dem Lagerabschnitt 15 und dem Bedienabschnitt 14 parallel zur Verschieberichtung 16 wirkt. Dieser Deformationskörper 18 ist in den Darstellungen gemäß Fig. 4 bis 6 vom Bedienabschnitt 14 verborgen und daher nicht zu sehen. Der Deformationskörper 18 kann in bevorzugter Weise auch als Rechteck- Schraubenfeder ausgebildet sein.

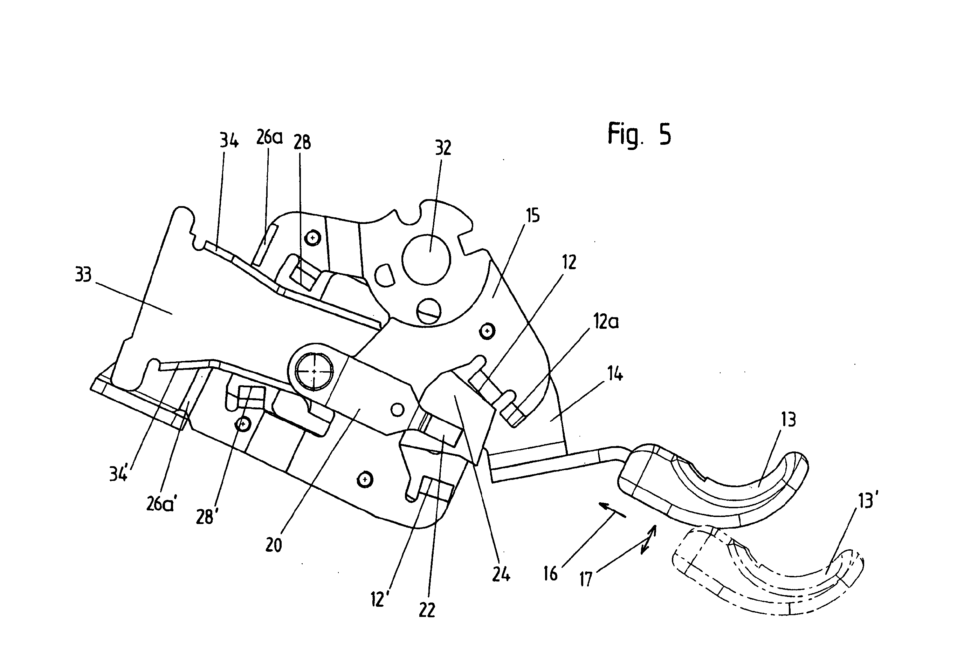

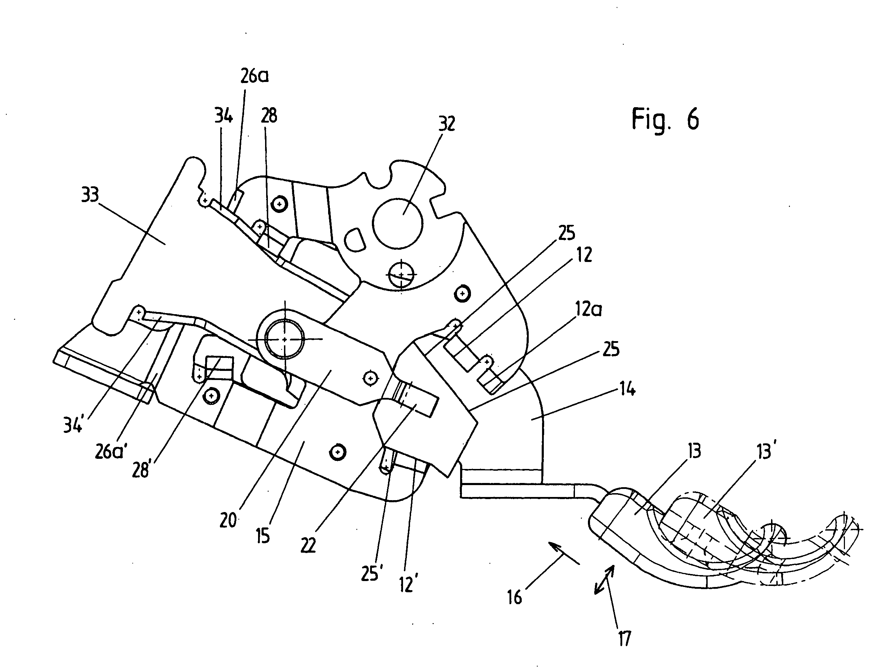

Im gezeigten Ausführungsbeispiel stellen die Auslöseeinrichtung 19 und der Deformationskörper 18 gemeinsam eine entgegen der Verschieberichtung 16 wirkende Gegenkraft zur Verfügung, die den Bedienabschnitt 14 in der ersten Betriebsstellung gemäß Fig. 4 hält, solange die auf den Bedienabschnitt 14 bzw. den Griff 13 einwirkende Kraft aus einer der Richtungen 41 den durch die elastischen Eigenschaften des Deformationskörpers 18 und der Auslösereinrichtung 19 vorgegebenen Kraftsollwert nicht überschreitet. Erst wenn die aus der genannten Kraft in Verschieberichtung 16 resultierende Kraft diesen Kraftsollwert überschreitet, wird der Deformationskörper 18 deformiert und die Rastnase 22 der Auslöseeinrichtung 19 aus der Rastausnehmung 21 ausgerastet, sodass sich der Bedienabschnitt 14 in Verschieberichtung 16 relativ zum Lagerabschnitt 15 verschieben kann. Hierdurch geraten die Lagerflächen 12 und 12' sowie 28 und 28' des Lagerabschnitts 15 außer Eingriff mit den ihnen jeweils zugeordneten Gegenlagerflächen 25, 25' und 34, 34'. Hierdurch werden die weiteren Betriebsstellungen erreicht, in denen der Bedienabschnitt 14 dieses Ausführungsbeispiels in Verschieberichtung 16 und in eine der dazu orthogonalen Bewegungsrichtungen 17 gegen den Lagerabschnitt 15 verschoben werden kann. Fig. 5 zeigt beispielhaft eine erste solche weitere Betriebsstellung. Gestrichelt dargestellt ist der Griff 13' in der ersten Betriebsstellung. Durchgezogen dargestellt ist der Griff 13 in der weiteren Betriebsstellung. Durch den Vergleich dieser beiden Positionen des Griffs 13 ist besonders gut zu sehen, dass der Bedienabschnitt 14 sich sowohl in der Verschieberichtung 16 als auch in der dazu orthogonalen Bewegungsrichtung 17 gegenüber der Ausgangsposition verschoben hat. In Fig. 5 wurde der Griff 13 dabei in Richtung des Lagerabschnitts 15 und nach oben verschoben. Fig. 6 zeigt eine weitere Betriebsstellung, in der der Griff 13 und damit das gesamte Bedienelement 14 relativ zum Bedienabschnitt 15 nach unten und zusätzlich auch in Verschieberichtung 16 zum Lagerabschnitt 15 hin verschoben wurde.

In diesem Zusammenhang wird noch einmal darauf hingewiesen, dass die Stellung gemäß Fig. 5 und 6 nur zwei von zahlreichen verschiedenen weiteren Betriebsstellungen sind, in die der Griff 13 bzw. das Bedienelement 14 im Crash-Fall ausweichen kann. In all diesen weiteren Betriebsstellungen ist aber der Bedienabschnitt 14 immer noch mittels des Deformationskörpers 18 und verschiedenen Kontaktstellen mit dem Lagerabschnitt 15 an diesem gehalten. Sobald die von außen auf den Griff 13 bzw. den Bedienabschnitt 14 einwirkenden Kräfte aufgehoben werden, schiebt der Deformationskörper 18 den Bedienabschnitt 14 wieder in die erste Betriebsstellung und damit in die Ausgangsposition gemäß Fig. 4.

Fig. 7 zeigt eine Explosionsdarstellung des Betätigungshebels 8 dieses Ausführungsbeispiels. Zu sehen ist zunächst, wie die Rastfeder 20 der Auslöseeinrichtung 19 mittels der Schraube 37 oder Niete und der Unterlegscheibe 38 am Lagerabschnitt 15 befestigt wird. Am Lagerabschnitt 15 selbst sind besonders gut die vorderen Lagerflächen 12 und 12' zu sehen. Von den hinteren Lagerflächen 28, 28' ist nur die obere Lagerfläche 28 zu sehen. Zusätzlich sieht man auch die Aufnahme 39 in der der hier als Schraubenfeder ausgeführte Deformationskörper 18 am Lagerabschnitt 15 abgestützt ist. Beim Bedienabschnitt 14 sieht man zunächst, wie der Griff 13 mittels der Schrauben 35' und der Muttern 36 am restlichen Bedienabschnitt 14 befestigt ist. Natürlich kann auch jede andere, an sich bekannte Art der Befestigung des Griffs 13 am Bedienabschnitt 14 vorgesehen sein. Z. B. kann der Griff 13 an den Bedienabschnitt 14 angespritzt sein. Darüber hinaus sind auch die hier einstückig miteinander verbundenen Klemmkörper 24 und Zusatzklemmkörper 33 mit den ihnen jeweils zugeordneten Gegenlagerflächen 25 und 25' sowie Zusatzgegenlagerflächen 34 und 34' zu sehen. Gut zu erkennen ist darüber hinaus auch die Rastausnehmung 21 im Bedienabschnitt 14. Zusätzlich ist auch das Gehäuse 31 dargestellt, welches mittels der Schrauben 35 am Lagerabschnitt 15 festgeschraubt wird.

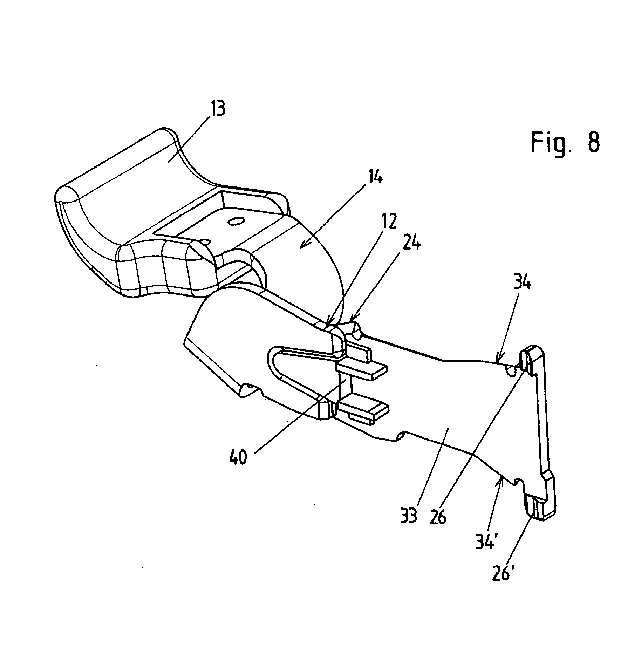

Fig. 8 zeigt eine Ansicht auf den Bedienabschnitt 14 von der anderen Seite. Hier ist die am Bedienabschnitt 14 angeordnete Aufnahme 40 für den Deformationskörper 18 gezeigt. Darüber hinaus sind neben den bereits erwähnten Bauteilen auch die in Form von Schrägflächen ausgeführten Spreizkörper 26 und 26' gut zu sehen, die in der ersten Betriebsstellung für eine Spielfreistellung sorgen, wie dies noch weiter unten erläutert wird.

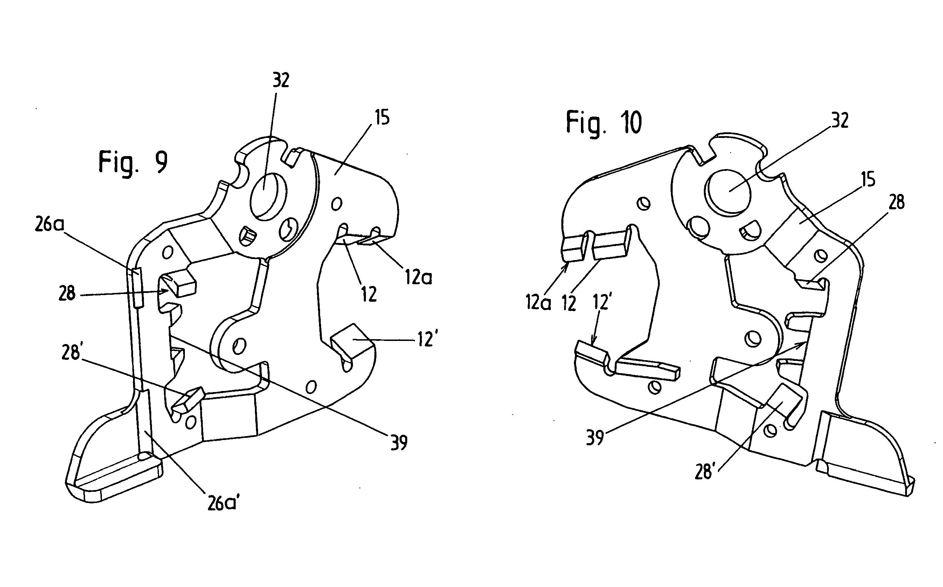

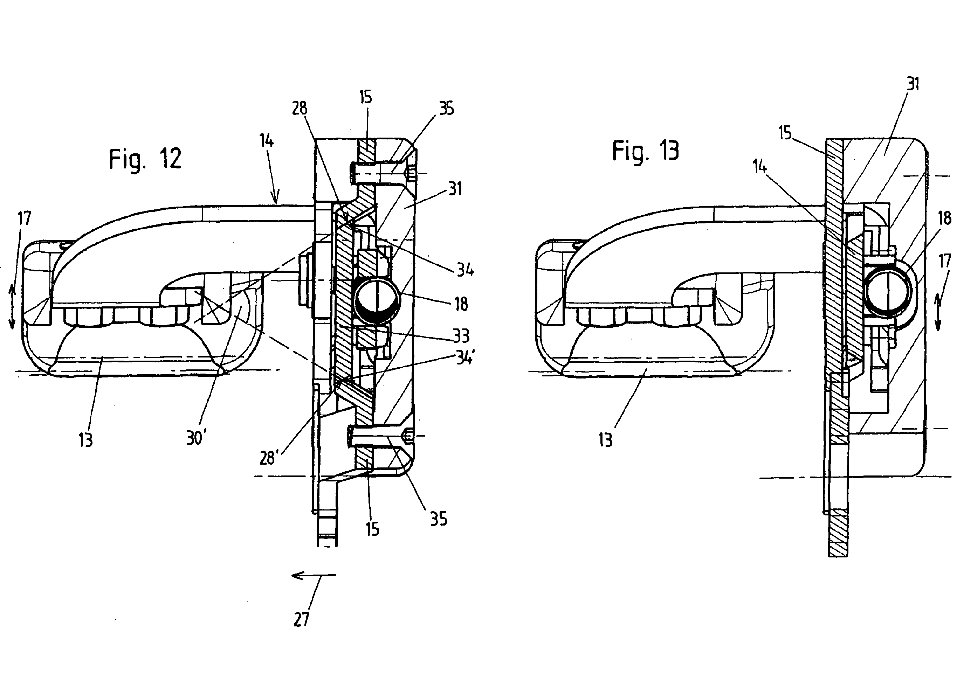

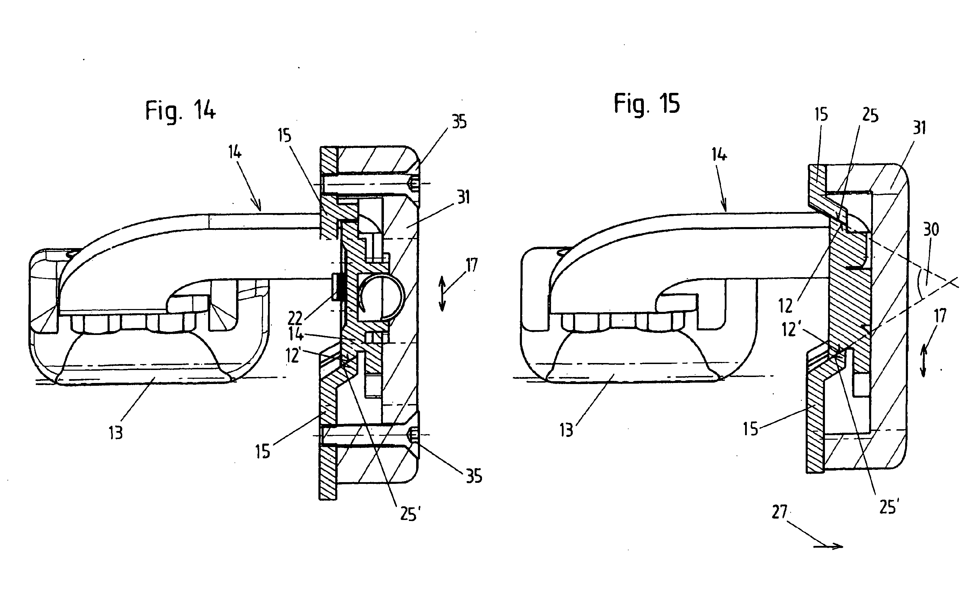

Die Fig. 9 und 10 zeigen Ansichten auf den Lagerabschnitt 15 von zwei Seiten. Besonders gut zu sehen ist hier bereits die schräge bzw. schwalbenschwanzartige Anordnung der Lagerflächen 12 und 12' sowie der Zusatzlagerflächen 28 und 28', wie sie anhand der Schnittdarstellung gemäß der Fig. 12 bis 15 weiter unten noch weiter im Detail erläutert werden. Fig. 11 zeigt eine Ansicht auf die in Fig. 4 verdeckte Rückseite des Betätigungshebels 8 in der ersten Betriebsstellung in der der Bedienabschnitt 14 am Lagerabschnitt 15 gehalten ist, wobei in dieser Darstellung das Gehäuse 31 weggelassen ist. Gut zu sehen ist die Abstützung des Deformationskörpers 18 am Lagerabschnitt 15 in der Aufnahme 39 und am Bedienabschnitt 14 in der Aufnahme 40. Fig. 12 zeigt einen Schnitt entlang der in Fig. 4 dargestellten Schnittlinie A-A. Dargestellt ist die Situation wenn sich der Bedienabschnitt 14 in der ersten Betriebsstellung befindet. In dieser ersten Betriebsstellung liegen die Zusatzlagerflächen 28 und 28' des Lagerabschnitts 15 an den Zusatzgegenlagerflächen 34 und 34' des Bedienabschnitts an. Die Zusatzlagerflächen 28 und 28' bilden dabei ein Schwalbenschwanzprofil und sind dabei in einer gedachten Schnittebene orthogonal bzw. normal auf die Verschieberichtung 16 in einem spitzen Winkel 30' zueinander angeordnet, wie dies durch die gestrichelten Verlängerungen der Trennflächen zwischen den Zusatzlagerflächen 28, 28' und Zusatzgegenlagerflächen 34 und 34' eingezeichnet ist. Die Verschieberichtung 16 ist in der hier gewählten Darstellung die Flächennormale auf die gezeigte Schnittebene. Durch diese Art der schwalbenschwanzprofilartigen Anordnung der Lagerflächen und Gegenlagerflächen ist der Bedienabschnitt 14 nicht nur in der Bewegungsrichtung 17 sondern auch in der Richtung 27 am Lagerabschnitt 15 abgestützt, wobei die Verschieberichtung 16 die Bewegungsrichtung 17 sowie die Richtung 27 jeweils orthogonal zueinander ausgerichtet und somit in den drei Raumrichtungen ausgerichtet sind. Fig. 13 zeigt den Schnitt entlang der Schnittlinie B-B aus Fig. 4. In dieser Schnittebene sind keine Lagerflächen vorhanden, mit denen der Bedienabschnitt 14 am Lagerabschnitt 15 gelagert ist. Fig. 14 zeigt den Schnitt entlang der Schnittlinie C-C aus Fig. 4. In dieser Schnittlinie kommt es wiederum zum Kontakt zwischen Lagerabschnitt 15 und Bedienabschnitt 14. Die Rastnase 22 drückt den Bedienabschnitt 14 in die Lagerflächen 12, 12'. Fig. 15 zeigt den Schnitt D-D aus Fig. 4 im Bereich der vorderen Lagerflächen 12 und 12' sowie der ihnen zugeordneten Gegenlagerflächen 25 und 25'. Auch hier bilden die Lagerflächen 12 und 12' ein Schwalbenschwanzprofil. Sie sind in einer gedachten Schnittebene orthogonal bzw. normal zur Verschieberichtung 16 in einem spitzen Winkel 30 zueinander verlaufend angeordnet. Dasselbe gilt auch für die entsprechenden Gegenlagerflächen 25 und 25'. Diese Art des Schwalbenschwanzprofils führt zusätzlich zur Abstützung des Bedienabschnitts 14 in den Richtungen 17 auch zu einer Abstützung in der dazu und zur Verschieberichtung 16 orthogonalen dritten Richtung 27. Vergleicht man die Schnitte gemäß der Fig. 12 und 15 miteinander, so wird deutlich, dass der Winkel 30 zwischen den Lagerflächen 12 und 12' und der Winkel 30' zwischen den Gegenlagerflächen 28 und 28' in zueinander entgegengesetzten Richtungen spitz zulaufen. Die Lagerflächen 12 und 12' sind somit in jeweils eine entgegen gesetzte Richtung geneigt, verglichen mit den Gegenlagerflächen 28 und 28'. Die dadurch gebildeten Schwalbenschwanzprofile weisen somit in entgegengesetzte Richtungen. Dadurch wirkt ein seitlicher bzw. außermittiger Aufprall eines Knies oder anderen Körperteils des Fahrers auf den Griff 13 in die öffnende Seite der Schwalbenschwanzprofile, wodurch die Freigabe des Bedienabschnitts 14 bei einem solchen Aufprall bzw. Crash sofort räumlich wirkt.

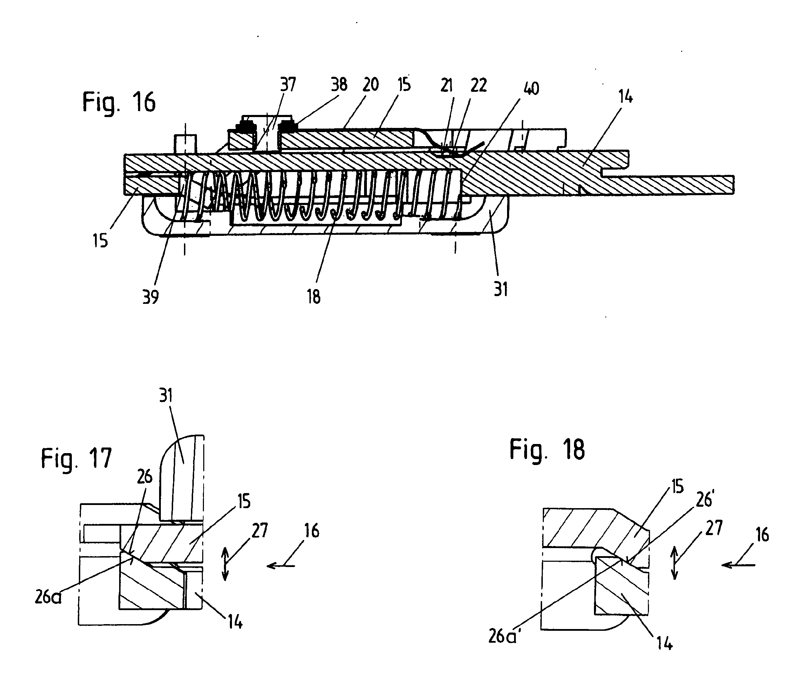

Fig. 16 zeigt einen Schnitt entlang der Schnittlinie E-E aus Fig. 4. Hier ist nochmals besonders gut die Lagerung des Deformationskörpers 18 einerseits am Bedienabschnitt 14 und andererseits am Lagerabschnitt 15 zu sehen.

Um in der ersten Betriebsstellung gemäß Fig. 4 ein Bewegungsspiel zwischen dem Bedienabschnitt 14 und dem Lagerabschnitt 15 in Richtung 27 zu vermeiden, weist der Bedienabschnitt 14 an seinem vom Griff 13 abgewandten Ende die Spreizkörper 26 und 26' auf. Diese besitzen Schrägflächen, welche den Bedienabschnitt 14 in der ersten Betriebsstellung in der Spreizrichtung 27 orthogonal zur Verschieberichtung 16 und orthogonal zur Bewegungsrichtung 17 vom Lagerabschnitt 15 abdrücken und somit für die gewünschte Spielfreistellung sorgt. Natürlich können diese Spreizkörper 26 und 26' auch anders ausgeformt sein. Auch ein einziger Spreizkörper kann bereits ausreichen. Im gezeigten Ausführungsbeispiel pressen die Spreizkörper 26 und 26' über die Spreizkörperanlageflächen 26a und 26a' jedenfalls die Zusatzgegenlagerflächen 34 und 34' des Bedienabschnitts 14 gegen die Zusatzlagerflächen 28 und 28' der Lagereinheit 15, sodass ein Spiel in Spreizrichtung 27 in diesem hinteren Bereich vermieden ist. Im vorderen Bereich, also im Bereich des Klemmkörpers 24 drückt die Rastnase 22 das Bedienelement 14 mit seinen Gegenlagerflächen 25 und 25' auf die Lagerflächen 12 und 12' des Lagerabschnitts 15, sodass auch in diesem vorderen Bereich in der ersten Betriebsstellung kein Spiel zwischen Bedienabschnitt 14 und Lagerabschnitt 15 vorhanden ist.

Nun ist es, wie bereits erwähnt, nicht zwingend notwendig, dass, wie im hier gezeigten Ausführungsbeispiel realisiert, sowohl eine Auslöseeinrichtung 19 als auch ein Deformationskörper 18 vorhanden ist. In einem abweichenden Ausführungsbeispiel kann z. B. auf die Auslöseeinrichtung 19 bzw. deren Rastfeder 20 verzichtet werden. Im Sinne einer Spielfreistellung kann diese dann durch einen oder mehrere entsprechende zusätzliche Spreizkörper und Spreizkörperanlageflächen ersetzt werden, welche den Bedienabschnitt 14 in seinem vorderen, dem Griff 13 zugewandten Bereich spielfrei stellen. Bei einem in dieser Weise abgewandelten Ausführungsbeispiel sorgt der Deformationskörper 18 sowohl für den Kraftsollwert als auch für eine Rückstellung in die erste Betriebsstellung gemäß Fig. 4. Alternativ hierzu kann in einem weiteren Ausführungsbeispiel aber auch auf den Deformationskörper 18 verzichtet werden. Bei solchen Ausführungsbeispielen ist dann günstigerweise die Auslöseeinrichtung 19 vorgesehen, die den Kraftsollwert bereitstellt. Eine Relativbewegung in Verschieberichtung 16 ist dann erst bei Überwinden der Haftreibung der Rastfeder 20 möglich. Die Rückstellung nach einem Ausrasten aus der Rastausnahme 21 kann dann per Hand erfolgen. In weiteren Ausführungsbeispielen kann die Auslöseeinrichtung auch in Form von Sollbruchstellen wie z B. Scherstiften o. dgl. ausgebildet sein. Auch hier kann gegebenenfalls auf den Deformationskörper 18 verzichtet werden. Dabei sollte dann der Lagerabschnitt 15 so ausgebildet sein, dass der Bedienabschnitt 14 auch in den weiteren Betriebsstellungen noch in diesem gehalten ist.

In einer weiteren Abwandlung der gezeigten Ausführungsbeispiele kann gemäß der Erfindung sogar vorgesehen sein, dass die Lagerflächen des Lagerabschnitts 15 und die Klemmkörper bzw. Gegenlagerflächen des Bedienabschnitts 14 so ausgeformt sind, dass sie in den weiteren Betriebsstellungen nicht nur eine Bewegung in zwei, sondern in drei zueinander orthogonalen Richtungen ermöglichen. Hierzu können der oder die Klemmkörper z. B. kegelstumpfförmig oder pyramidenstumpfförmig oder dergleichen und die an ihnen angreifenden Lagerflächen des Lagerabschnitts 15 entsprechend ausgeformt sein, womit ein Verschwenken und Verschieben des Bedienabschnitts 14 in drei zueinander orthogonalen Bewegungsrichtungen möglich ist.

Der Bedienabschnitt 14 wie auch der Lagerabschnitt 15 können z.B. aus Metall, vorzugsweise Stahl, und günstigerweise als Stanzteile mit Prägung ausgebildet sein. Dies ermöglicht eine besonders wirtschaftliche Herstellung. Es ist aber auch jede andere, beim Stand der Technik bekannte und geeignete Herstellungsform und Materialwahl möglich.

### Legende zu den Hinweisziffern:

- 1: Lenkspindel
- 2: lenkradseitiges Ende
- 3: Manteleinheit
- 4: Trageinheit
- 5: Feststelleinrichtung
- 6: Verstellrichtung
- 7: Verstellrichtung
- 8: Betätigungshebel
- 9: Achse
- 10: Spannbolzen
- 11: Verzahnung
- 12, 12': Lagerflächen
- 12a: zurückgesetzte Lagerfläche
- 13, 13': Griff
- 14: Bedienabschnitt
- 15: Lagerabschnitt
- 16: Verschieberichtung
- 17: Bewegungsrichtung
- 18: Deformationskörper
- 19: Auslöseeinrichtung
- 20: Rastfeder
- 21: Rastausnehmung
- 22: Rastnase
- 23, 23': Abstand
- 24: Klemmkörper
- 25, 25': Gegenlagerfläche
- 26, 26': Spreizkörper
- 26a, 26a': Spreizkörperanlageflächen
- 27: Spreizrichtung
- 28, 28': Zusatzlagerflächen
- 29, 29': Abstand
- 30, 30': spitzer Winkel
- 31: Gehäuse
- 32: Spannbolzenaufnahme
- 33: Zusatzklemmkörper
- 34, 34': Zusatzgegenlagerflächen
- 35, 35': Schrauben
- 36: Mutter
- 37: Schraube
- 38: Unterlegscheibe
- 39: Aufnahme
- 40: Aufnahme
- 41: Richtung

## Patentansprüche

1. Lenksäule für ein Kraftfahrzeug, mit einer Lenkspindel (1) und einer Feststelleinrichtung (5), welche mittels eines Betätigungshebels (8) zwischen einem geöffneten Zustand und einem geschlossenen Zustand verstellbar ist, wobei die Lenkspindel (1) im geöffneten Zustand der Feststelleinrichtung (5) in ihrer Position verstellbar und im geschlossenen Zustand der Feststelleinrichtung (5) in ihrer Position fixiert ist, **dadurch gekennzeichnet, dass** der Betätigungshebel (8) zumindest einen Bedienabschnitt (14) und zumindest einen Lagerabschnitt (15) und der Lagerabschnitt (15) zumindest zwei Lagerflächen (12, 12') aufweist, wobei der Bedienabschnitt (14) zwischen den Lagerflächen (12, 12') in einer ersten Betriebsstellung gehalten ist und in zumindest einer Verschieberichtung (16) aus der ersten Betriebsstellung in zumindest eine weitere Betriebsstellung verschiebbar ist, wobei der Bedienabschnitt (14) in der weiteren Betriebsstellung zwischen den Lagerflächen (12, 12') in zumindest einer zur Verschieberichtung (16) orthogonalen Bewegungsrichtung (17) bewegbar am Lagerabschnitt (15) gehalten ist.

2. Lenksäule nach Anspruch 1, **dadurch gekennzeichnet, dass** der Bedienabschnitt (14) aus der ersten Betriebsstellung in mindestens zwei, vorzugsweise mehreren, winkelig zueinander ausgerichteten Verschieberichtungen (16) in die weitere(n) Betriebsstellung(en) verschiebbar ist, wobei vorzugsweise die Verschieberichtungen (16) zueinander einen beliebigen Winkel in einem durchgehenden Winkelbereich, vorzugsweise von zumindest 30°, einnehmen können.

3. Lenksäule nach Anspruch 1 oder 2, **dadurch gekennzeichnet, dass** die Lagerflächen (12, 12') auf einander gegenüberliegenden Seiten des Bedienabschnitts (14) angeordnet sind.

4. Lenksäule nach einem der Ansprüche 1 bis 3, **dadurch gekennzeichnet, dass** die Lagerflächen (12, 12') mit einem in Verschieberichtung (16) zunehmenden Abstand (23, 23') voneinander am Lagerabschnitt (15) angeordnet sind.

5. Lenksäule nach einem der Ansprüche 1 bis 4, **dadurch gekennzeichnet, dass** die Lagerflächen (12, 12') ein Schwalbenschwanzprofil bilden.

6. Lenksäule nach einem der Ansprüche 1 bis 5, **dadurch gekennzeichnet, dass** die Lagerflächen (12, 12') in einer gedachten Schnittebene orthogonal bzw. normal zur Verschieberichtung (16) in einem spitzen Winkel (30) zueinander verlaufend angeordnet sind.

7. Lenksäule nach einem der Ansprüche 1 bis 6, **dadurch gekennzeichnet, dass** der Bedienabschnitt (14) zumindest einen Klemmkörper (24) aufweist, der in der ersten Betriebsstellung zwischen den Lagerflächen (12, 12') des Lagerabschnitts (15) gehalten ist, wobei vorzugsweise der Klemmkörper (24) zumindest zwei Gegenlagerflächen (25, 25') aufweist, mit denen er in der ersten Betriebsstellung zwischen den Lagerflächen (12, 12') des Lagerabschnitts (15) gehalten ist.

8. Lenksäule nach Anspruch 7, **dadurch gekennzeichnet, dass** die Gegenlagerflächen (25, 25') in einer gedachten Schnittebene orthogonal bzw. normal zur Verschieberichtung (16) in einem spitzen Winkel zueinander angeordnet sind.

9. Lenksäule nach einem der Ansprüche 1 bis 8, **dadurch gekennzeichnet, dass** zumindest eine Auslöseeinrichtung (19) und/oder zumindest ein elastisch deformierbarer Deformationskörper (18) vorgesehen ist (sind), die (der) den Bedienabschnitt (14) bei einer Krafteinwirkung unterhalb eines Kraftsollwertes am Lagerabschnitt (15) in der ersten Betriebsstellung hält (halten) und bei einer den Kraftsollwert überschreitenden Krafteinwirkung den Bedienabschnitt (14) zum Verschieben in der (den) Verschieberichtung(en) (16) freigibt (freigeben), wobei vorzugsweise die Auslöseeinrichtung (19) eine Rastverbindung aufweist oder ist.

10. Lenksäule nach Anspruch 9, **dadurch gekennzeichnet, dass** die Auslöseeinrichtung (19) eine Rastfeder (20) und eine Rastausnehmung (21) aufweist, wobei die Rastfeder (20) am Lagerabschnitt (15) befestigt und die Rastausnehmung (21) am Bedienabschnitt (14), vorzugsweise an einem Klemmkörper (24) des Bedienabschnitts (14), angeordnet oder die Rastfeder (20) am Bedienabschnitt (14), vorzugsweise am Klemmkörper (24) des Bedienabschnitts (14), befestigt und die Rastausnehmung (21) am Lagerabschnitt (15) angeordnet ist und die Rastfeder (20) mit einer Rastnase (22) in der ersten Betriebsstellung in die Rastausnehmung (21) eingerastet ist.

11. Lenksäule nach einem der Ansprüche 9 oder 10, **dadurch gekennzeichnet, dass** der elastisch deformierbare Deformationskörper (18) zwischen dem Bedienabschnitt (14) und dem Lagerabschnitt (15) wirkt und/oder angeordnet ist, wobei der Deformationskörper (18) beim Verschieben des Bedienabschnitts (14) von der ersten Betriebsstellung in die weitere Betriebsstellung elastisch deformierbar, vorzugsweise komprimierbar, ist, wobei vorzugsweise der Deformationskörper (18) eine Schraubenfeder ist.

12. Lenksäule nach einem der Ansprüche 9 bis 11, **dadurch gekennzeichnet, dass** der Deformationskörper (18) am Bedienabschnitt (14) und/oder am Lagerabschnitt (15), vorzugsweise permanent, lösbar abgestützt oder fixiert ist.

13. Lenksäule nach einem der Ansprüche 1 bis 12, **dadurch gekennzeichnet, dass** die Lenksäule, vorzugsweise der Bedienabschnitt (14) und/oder der Lagerabschnitt (15), zumindest einen Spreizkörper (26, 26') aufweist, der den Bedienabschnitt (14) und den Lagerabschnitt (15) in der ersten Betriebsstellung, vorzugsweise in einer Spreizrichtung (27) orthogonal zur Verschieberichtung (16) und orthogonal zur Bewegungsrichtung (17), voneinander abdrückt oder zusammendrückt und damit in der ersten Betriebsstellung ein Bewegungsspiel zwischen dem Bedienabschnitt (14) und dem Lagerabschnitt (15) unterbindet.

14. Lenksäule nach einem der Ansprüche 1 bis 13, **dadurch gekennzeichnet, dass** der Lagerabschnitt (15) zusätzlich zu den Lagerflächen (12, 12'), vorzugsweise in Verschieberichtung (16) hinter den Lagerflächen (12, 12'), zumindest zwei Zusatzlagerflächen (28, 28') aufweist, zwischen denen der Bedienabschnitt (14) in der ersten Betriebsstellung gehalten ist.

15. Betätigungshebel (8) für eine Lenksäule, insbesondere nach einem der Ansprüche 1 bis 14, **dadurch gekennzeichnet, dass** der Betätigungshebel (8) zumindest einen Bedienabschnitt (14) und zumindest einen Lagerabschnitt (15) und der Lagerabschnitt (15) zumindest zwei Lagerflächen (12, 12') aufweist, wobei der Bedienabschnitt (14) zwischen den Lagerflächen (12, 12') in einer ersten Betriebsstellung gehalten ist und in zumindest einer Verschieberichtung (16) aus der ersten Betriebsstellung in zumindest eine weitere Betriebsstellung verschiebbar ist, wobei der Bedienabschnitt (14) in der weiteren Betriebsstellung zwischen den Lagerflächen (12, 12') in zumindest einer zur Verschieberichtung (16) orthogonalen Bewegungsrichtung (17) bewegbar am Lagerabschnitt (15) gehalten ist.

## Claims

1. Steering column for a motor vehicle, comprising a steering shaft (1) and a fixing device (5) which can be adjusted by means of an actuating lever (8) between an open condition and a closed condition, the position of the steering shaft (1) being adjustable in the open condition of the fixing device (5) and its position being fixed in the closed condition of the fixing device (5), **characterized in that** the actuating lever (8) has at least one operating section (14) and at least one bearing section (15) and the bearing section (15) has at least two bearing surfaces (12, 12'), the operating section (14) being held between the bearing surfaces (12, 12') in a first operating position and being displaceable from the first operating position into at least one further operating position in at least one direction of displacement (16), the operating section (14) in the further operating position being held on the bearing section (15) between the bearing surfaces (12, 12') movably in at least one direction of movement (17) at right angles to the direction of displacement (16).

2. Steering column according to Claim 1, **characterized in that** the operating section (14) is displaceable out of the first operating position in at least two, and preferably several, directions of displacement (16) directed at an angle with respect to each other into the further operating position(s), preferably the directions of displacement (16) with respect to each other being able to assume any desired angle in a continuous angle range, preferably an angle of at least 30°.

3. Steering column according to Claim 1 or Claim 2, **characterized in that** the bearing surfaces (12, 12') are arranged on sides of the operating section (14) situated opposite each other.

4. Steering column according to one of Claims 1 to 3, **characterized in that** the bearing surfaces (12, 12') are arranged on the bearing section (15) at an increasing distance (23, 23') from each other in the direction of displacement (16).

5. Steering column according to one of Claims 1 to 4, **characterized in that** the bearing surfaces (12, 12') form a dovetail profile.

6. Steering column according to one of Claims 1 to 5, **characterized in that** the bearing surfaces (12, 12') are arranged extending so as to form an acute angle (30) relative to each other in an imaginary cross-sectional plane at right angles or perpendicular to the direction of displacement (16).

7. Steering column according to one of Claims 1 to 6, **characterized in that** the operating section (14) has at least one clamping body (24) which is held in the first operating position between the bearing surfaces (12, 12') of the bearing section (15), the clamping body (24) preferably having at least two counter bearing surfaces (25, 25') with which it is held in the first operating position between the bearing surfaces (12, 12') of the bearing section (15).

8. Steering column according to Claim 7, **characterized in that** the counter bearing surfaces (25, 25') are arranged so as to form an acute angle relative to each other in an imaginary cross-sectional plane at right angles or perpendicular to the direction of displacement (16).

9. Steering column according to one of Claims 1 to 8, **characterized in that** at least one release device (19) and/or at least one elastically deformable deformation body (18) is (are) provided, said device(s) or body/bodies keeping the operating section (14) in the first operating position when the bearing section (15) is acted on by a force below the set force value and releasing the operating section (14) for displacement in the direction(s) of displacement (16) when acted on by a force exceeding the set force value, the release device (19) preferably having or being a snap-in connection.

10. Steering column according to Claim 9, **characterized in that** the release device (19) has a snap-in resilient element (20) and a locking recess (21), the snap-in resilient element (20) being fixed on the bearing section (15) and the locking recess (21) being arranged on the operating section (14), preferably on a clamping body (24) of the operating section (14) or the snap-in resilient element (20) being fixed on the operating section (14), preferably on the clamping body (24) of the operating section (14) and the locking recess (21) being arranged on the bearing section (15) and the snap-in resilient element (20) being engaged by means of a snap-in nose (22) inside the locking recess (21) in the first operating position.

11. Steering column according to either one of Claim 9 or Claim 10, **characterized in that** the elastically deformable deformation body (18) acts and/or is arranged between the operating section (14) and the bearing section (15), the deformation body (18) during displacement of the operating section (14) from the first operating position into the further operating position being elastically deformable and preferably compressible, the deformation body (18) being preferably a helical spring.

12. Steering column according to one of Claims 9 to 11, **characterized in that** the deformation body (18) is releasably supported or fixed, preferably permanently, on the operating section (14) and/or on the bearing section (15).

13. Steering column according to one of Claims 1 to 12, **characterized in that** the steering column, preferably the operating section (14) and/or the bearing section (15), has at least one expanding body (26, 26') which presses the operating section (14) and the bearing section (15) away from each other or together in the first operating position, preferably in an expanding direction (27) at right angles to the direction of displacement (16) and at right angles to the direction of movement (17) and thus prevents play in movement between the operating section (14) and the bearing section (15) in the first operating position.

14. Steering column according to one of Claims 1 to 13, **characterized in that** the bearing section (15) has, in addition to the bearing surfaces (12, 12'), preferably in the direction of displacement (16) behind the bearing surfaces (12, 12'), at least two additional bearing surfaces (28, 28') between which the operating section (14) is kept in the first operating position.

15. Actuating lever (8) for a steering column, in particular according to one of Claims 1 to 14, **characterized in that** the actuating lever (8) has at least one operating section (14) and at least one bearing section (15) and the bearing section (15) has at least two bearing surfaces (12, 12'), the operating section (14) being held between the bearing surfaces (12, 12') in a first operating position and being displaceable in at least one direction of displacement (16) from the operating position into at least one further operating position, the operating section (14) in the further operating position being held on the bearing section (15) between the bearing surfaces (12, 12') movably in at least one direction of movement (17) at right angles to the direction of displacement (16).

## Revendications

1. Colonne de direction pour un véhicule automobile, avec un arbre de direction (1) et un dispositif de blocage (5) qui peut être réglé au moyen d'un levier d'actionnement (8) entre un état ouvert et un état fermé, l'arbre de direction (1) pouvant être réglé dans la position à l'état ouvert du dispositif de blocage (5) et étant fixé dans la position à l'état fermé du dispositif de blocage (5), **caractérisée en ce que** le levier d'actionnement (8) présente au moins une section de commande (14) et au moins une section de palier (15) et la section de palier (15) présente au moins deux surfaces de palier (12, 12'), la section de commande (14) étant maintenue dans une première position de fonctionnement entre les surfaces de palier (12, 12') et pouvant être déplacée dans au moins un sens de déplacement (16) de la première position de fonctionnement dans au moins une autre position de fonctionnement, la section de commande (14) étant maintenue sur la section de palier (15) de manière mobile dans l'autre position de fonctionnement entre les surfaces de palier (12, 12') dans au moins un sens du mouvement (17) perpendiculaire au sens de déplacement (16).

2. Colonne de direction selon la revendication 1, **caractérisée en ce que** la section de commande (14) peut être déplacée de la première position de fonctionnement dans au moins deux, de préférence plusieurs sens de déplacement (16) orientés angulairement les uns par rapport aux autres dans l'autre/les autres position(s) de fonctionnement, les sens de déplacement (16) pouvant occuper de préférence un angle quelconque les uns par rapport aux autres dans une zone angulaire continue, de préférence d'au moins 30°.

3. Colonne de direction selon la revendication 1 ou 2, **caractérisée en ce que** les surfaces de palier (12, 12') sont disposées sur des côtés opposés de la section de commande (14).

4. Colonne de direction selon l'une quelconque des revendications 1 à 3, **caractérisée en ce que** les surfaces de palier (12, 12') sont disposées sur la section de palier (15) à une distance (23, 23') l'une de l'autre, qui est croissante dans le sens de déplacement (16).

5. Colonne de direction selon l'une quelconque des revendications 1 à 4, **caractérisée en ce que** les surfaces de palier (12, 12') forment un profilé en queue d'aronde.

6. Colonne de direction selon l'une quelconque des revendications 1 à 5, **caractérisée en ce que** les surfaces de palier (12, 12') sont disposées de manière à s'étendre dans un plan de coupe imaginaire orthogonalement ou normalement au sens de déplacement (16) dans un angle aigu (30) l'une par rapport à l'autre.

7. Colonne de direction selon l'une quelconque des revendications 1 à 6, **caractérisée en ce que** la section de commande (14) présente au moins un corps de serrage (24) qui est maintenu dans la première position de fonctionnement entre les surfaces de palier (12, 12') de la section de palier (15), le corps de serrage (24) présentant de préférence au moins deux surfaces de palier antagonistes (25, 25') qui le maintiennent dans la première position de fonctionnement entre les surfaces de palier (12, 12') de la section de palier (15).

8. Colonne de direction selon la revendication 7, **caractérisée en ce que** les surfaces de palier antagonistes (25, 25') sont disposées dans un plan de coupe imaginaire orthogonalement ou normalement au sens de déplacement (16) dans un angle aigu l'une par rapport à l'autre.

9. Colonne de direction selon l'une quelconque des revendications 1 à 8, **caractérisée en ce qu'**au moins un dispositif de déclenchement (19) et/ou au moins un corps de déformation (18) déformable élastiquement est prévu, lequel maintient la section de commande (14) en cas d'action d'une force au-dessous d'une valeur de consigne de force sur la section de palier (15) dans la première position de fonctionnement et libère la section de commande (14) pour le déplacement dans le/les sens de déplacement (16) en cas d'action d'une force dépassant la valeur de consigne de force, le dispositif de déclenchement (19) présentant ou étant de préférence une liaison à crans.

10. Colonne de direction selon la revendication 9, **caractérisée en ce que** le dispositif de déclenchement (19) présente un ressort à cran d'arrêt (20) et un évidement à cran (21), le ressort à cran d'arrêt (20) étant fixé sur la section de palier (15) et l'évidement à cran (21) étant disposé sur la section de commande (14), de préférence sur un corps de serrage (24) de la section de commande (14) ou le ressort à cran d'arrêt (20) étant fixé sur la section de commande (14), de préférence sur le corps de serrage (24) de la section de commande (14) et l'évidement à cran (21) étant disposé sur la section de palier (15) et le ressort à cran d'arrêt (20) étant encliqueté avec un nez à cran (22) dans l'évidement à cran (21) dans la première position de fonctionnement.

11. Colonne de direction selon l'une quelconque des revendications 9 ou 10, **caractérisée en ce que** le corps de déformation (18) déformable élastiquement agit et/ou est disposé entre la section de commande (14) et la section de palier (15), le corps de déformation (18) pouvant être déformé élastiquement lors du déplacement de la section de commande (14) de la première position de fonctionnement dans l'autre position de fonctionnement, de préférence pouvant être comprimé, le corps de déformation (18) étant de préférence un ressort à boudin.

12. Colonne de direction selon l'une quelconque des revendications 9 à 11, **caractérisée en ce que** le corps de déformation (18) est en appui ou est fixé de manière détachable sur la section de commande (14) et/ou sur la section de palier (15) de préférence en permanence.

13. Colonne de direction selon l'une quelconque des revendications 1 à 12, **caractérisée en ce que** la colonne de direction, de préférence la section de commande (14) et/ou la section de palier (15) présente au moins un corps d'écartement (26, 26') qui refoule ou comprime la section de commande (14) et la section de palier (15) dans la première position de fonctionnement, de préférence dans un sens d'écartement (27) orthogonalement au sens de déplacement (16) et orthogonalement au sens du mouvement (17) et ainsi empêche un jeu de déplacement entre la section de commande (14) et la section de palier (15) dans la première position de fonctionnement.

14. Colonne de direction selon l'une quelconque des revendications 1 à 13, **caractérisée en ce que** la section de palier (15) présente, outre les surfaces de palier (12, 12') de préférence dans le sens de déplacement (16) derrière les surfaces de palier (12, 12'), au moins deux surfaces de palier supplémentaires (28, 28'), entre lesquelles la section de commande (14) est maintenue dans la première position de fonctionnement.

15. Levier d'actionnement (8) pour une colonne de direction, en particulier selon l'une quelconque des revendications 1 à 14, **caractérisée en ce que** le levier d'actionnement (8) présente au moins une section de commande (14) et au moins une section de palier (15) et la section de palier (15) présente au moins deux surfaces de palier (12, 12'), la section de commande (14) étant maintenue entre les surfaces de palier (12, 12') dans une première position de fonctionnement et pouvant être déplacée dans au moins un sens de déplacement (16) de la première position de fonctionnement dans au moins une autre position de fonctionnement, la section de commande (14) étant maintenue sur la section de palier (15) de manière mobile dans l'autre position de fonctionnement entre les surfaces de palier (12, 12') dans au moins un sens du mouvement (17) orthogonal au sens de déplacement (16).
